# EUROPEAN PATENT APPLICATION

(11) **EP 4 470 706 A1**
(43) Date of publication of application: **04.12.2024**
(21) Application number: 24178123.6
(22) Date of filing: 26.05.2024
(51) Int. Cl.: B23K 11/11, B23K 11/25, B23K 11/34

(54) **SOLID STATE WELDING APPARATUS AND METHOD FOR REMOVING IMPURITY**

(30) Priority: 29.05.2023 JP 2023087685
(71) Applicant: OSAKA UNIVERSITY, Suita-shi Osaka 565-0871 (JP); DAIHEN Corporation, Yodogawa-ku Osaka-shi, Osaka 532-8512 (JP)
(72) Inventor: FUJII, Hidetoshi, Osaka, 565-0871 (JP); MORISADA, Yoshiaki, Osaka, 565-0871 (JP); AIBARA, Takumi, Osaka, 565-0871 (JP); MIYAUCHI, Takaaki, Osaka, 532-8512 (JP); UEYAMA, Tomoyuki, Osaka, 532-8512 (JP); TANAKA, Toshiyuki, Osaka, 532-8512 (JP)
(74) Representative: Zacco GmbH

(57) **Abstract**

A solid state welding apparatus (1) comprises a pair of compression bars (11) and (12) that presses a first surface-treated metal workpiece (W10) and a second surface-treated metal workpiece (W20) on sides opposite in a direction of a thickness of the workpieces, a pair of electrodes (21) and (22) disposed around the pair of compression bars (11) and (12), respectively, and a controller (30). The controller (30) controls the pair of compression bars (11) and (12) to cause a first load to act on each of the first and second workpieces (W10) and (W20), subsequently controls the pair of compression bars (11) and (12) to subject compressive force to load removal to cause a second load smaller than the first load to act on the first and second workpieces (W10) and (W20), and subsequently passes a current through the pair of electrodes (21) and (22) to remove an impurity on a metal surface.

## Description

### CROSS REFERENCE TO RELATED APPLICATIONS

This nonprovisional application is based on Japanese Patent Application No. 2023-087685 filed on May 29, 2023 with the Japan Patent Office, the entire contents of which are hereby incorporated by reference.

### BACKGROUND OF THE INVENTION

### Field of the Invention

The present disclosure relates to a solid state welding apparatus and a method using the solid state welding apparatus for removing an impurity on a metal surface.

### Description of the Background Art

WO2021/182444 discloses a solid-phase spot-welding device comprising a pressing part and a pair of welding electrodes. The pressing part can press two metal plates in a direction orthogonal to the metal plates. The pair of welding electrodes heats each metal plate by passing a current through the two metal plates while the pair of welding electrodes clamps the metal plates on their sides opposite in the direction of their thickness. In the present specification, such a joining method as described in WO2021/182444 that does not melt a metal and instead joins the metal in a solid state in a low temperature range to prevent the metal from being molten by a large current and thus reduced in strength or the like, will be referred to as "solid state welding".

### SUMMARY OF THE INVENTION

WO2021/182444 does not consider joining a metal having a surface plated or subjected to a similar treatment. When a surface-treated metal is joined, a plating layer or the like on a metal surface acts as an impurity and thus reduces quality in joining, and it may thus be difficult to maintain high joining quality. In joining a surface-treated metal, it is desirable to initially remove an impurity from the metal and subsequently join the metal.

An object of the present disclosure is to provide a solid state welding apparatus capable of removing an impurity on a surface of a surface-treated metal, and a method for removing an impurity on a metal surface using the solid state welding apparatus.

In one aspect of the present disclosure, a solid state welding apparatus comprises a pair of compression bars that presses a first surface-treated metal workpiece and a second surface-treated metal workpiece on sides opposite in a direction of a thickness of the workpieces, a pair of electrodes disposed around the pair of compression bars, respectively, and a controller. The controller controls the pair of compression bars to cause a first load to act on each of the first and second workpieces, subsequently controls the pair of compression bars to subject compressive force to load removal to cause a second load smaller than the first load to act on the first and second workpieces, and subsequently passes a current through the pair of electrodes to remove an impurity on a metal surface.

In one aspect of the present disclosure, a method for removing an impurity relates to a method for removing an impurity on a metal surface by using a solid state welding apparatus comprising a pair of compression bars that presses a first surface-treated metal workpiece and a second surface-treated metal workpiece on sides opposite in a direction of a thickness of the workpieces, a pair of electrodes disposed around the pair of compression bars, respectively, and a controller. The controller performs the steps of: controlling the pair of compression bars to cause a first load to act on each of the first and second workpieces; subsequently controlling the pair of compression bars to subject compressive force to load removal to cause a second load smaller than the first load to act on the first and second workpieces, and subsequently passing a current through the pair of electrodes to remove an impurity on the metal surface.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram schematically showing a step of passing a current in a solid state welding apparatus according to an embodiment of the present disclosure.
Fig. 2 is a diagram for illustrating a joining process including removal of an impurity on a metal surface in the solid state welding apparatus according to the embodiment of the present disclosure.
Fig. 3 is a diagram schematically showing how a current passes in different manners depending on a difference in load.
Fig. 4 is a diagram showing how a current, a load and a stroke change with respect to time.
Fig. 5 is a flowchart showing content of control executed by a controller.
Fig. 6 is a diagram showing how a current, a load and a stroke change with respect to time in an exemplary variation.

### DESCRIPTION OF THE PREFERRED EMBODIMENTS

Hereinafter, embodiments of the present disclosure will be described in detail with reference to the accompanying drawings. In the figures, identical or equivalent components are identically denoted and will not be described repeatedly.

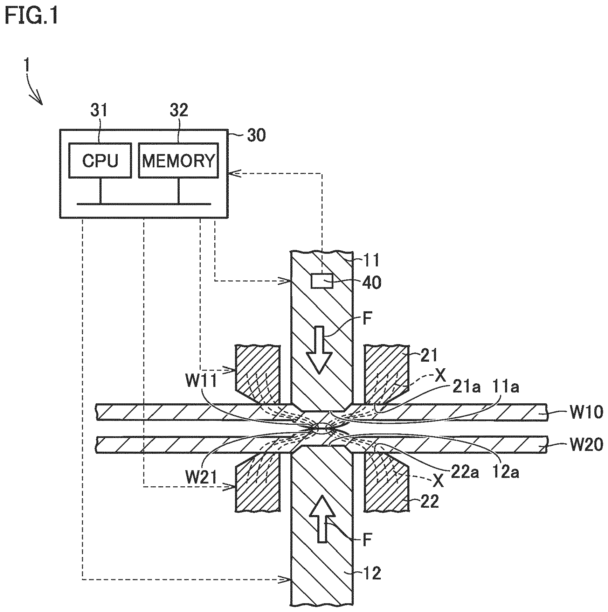

Fig. 1 is a diagram schematically showing a step of passing a current in a solid state welding apparatus 1 according to an embodiment of the present disclosure. Solid state welding apparatus 1 passes a current through a plurality of workpieces W10 and W20, one overlying the other, to provide a softened region at an interface of the plurality of workpieces W10 and W20, and plastically deforms the softened region to join the plurality of workpieces W10 and W20 together in a solid state without melting the workpieces.

The plurality of workpieces W10 and W20 include a first workpiece W10 and a second workpiece W20. Workpieces W10 and W20 are each made of a metal such as iron or aluminum. Workpieces W10 and W20 are each formed for example in a flat plate. Workpieces W10 and W20 each have a metal surface plated or similarly treated.

As shown in Fig. 1, solid state welding apparatus 1 comprises a pair of compression bars 11 and 12, a pair of electrodes 21 and 22, a controller 30, and a sensor 40.

The pair of compression bars 11 and 12 can apply pressure to first and second workpieces W10 and W20 on sides opposite in a direction of a thickness of the plate-shaped workpieces when they are stacked together. The pair of compression bars 11 and 12 is driven by a driving source (e.g., a servo press) not shown. The pair of compression bars 11 and 12 includes a first compression bar 11 and a second compression bar 12.

First compression bar 11 has a shape elongated in one direction (a direction of an arrow F in Fig. 1). First compression bar 11 is capable of pressing first workpiece W10 so that first workpiece W10 is plastically deformed. Specifically, first compression bar 11 is capable of pressing first workpiece W10 so that protrusion W11 is formed on first workpiece W10. First compression bar 11 is made of tungsten carbide, for example. In the present embodiment, first compression bar 11 is formed cylindrically. First compression bar 11 has a pressing surface 11a to press first workpiece W10. Pressing surface 11a is an end face of first compression bar 11. Pressing surface 11a is formed in a circle.

Second compression bar 12 has the same configuration as first compression bar 11. Second compression bar 12 is disposed such that second compression bar 12 has a central axis located on an extension of the central axis of first compression bar 11 and second compression bar 12 has a pressing surface 12a opposite to pressing surface 11a of first compression bar 11. First compression bar 11 and second compression bar 12 may have a shape other than a cylindrical shape.

Sensor 40 is provided for example at first compression bar 11. In the present embodiment, a load cell is used as sensor 40. Sensor 40 may not be installed at first compression bar 11.

The pair of electrodes 21 and 22 can pass a current through first and second workpieces W10 and W20 while the pair of electrodes are in contact with first and second workpieces W10 and W20. The pair of electrodes 21 and 22 are supplied with a voltage and a current from a power supply unit (not shown). The pair of electrodes 21 and 22 includes a first electrode 21 and a second electrode 22.

First electrode 21 can come into contact with first workpiece W10 at a portion around a portion to which first compression bar 11 applies pressure. In the present embodiment, first electrode 21 is formed in a cylinder surrounding first compression bar 11. A gap is provided between an inner circumferential surface of first electrode 21 and an outer circumferential surface of first compression bar 11. First electrode 21 is made of copper for example. First electrode 21 has a contact surface 21a that comes into contact with first workpiece W10. Contact surface 21a is formed annularly. Contact surface 21a may not be formed annularly.

Second electrode 22 has the same configuration as first electrode 21. Second electrode 22 can come into contact with second workpiece W20 at a portion around a portion to which second compression bar 12 applies pressure. Second electrode 22 is disposed such that second electrode 22 has a central axis located on an extension of the central axis of first electrode 21 and second electrode 22 has a contact surface 22a opposite to contact surface 21a of first electrode 21.

Controller 30 includes a CPU 31 (Central Processing Unit), a memory 32 (ROM (Read Only Memory) and a RAM (Random Access Memory)), an input/output device (not shown) to input/output a variety of types of signals, etc. CPU 31 functions as processing circuitry that develops a program stored in the ROM into the RAM or the like and executes the program. The program stored in the ROM is a program describing a processing procedure for controller 30. Controller 30 controls each device in accordance with these programs. This control is not limited to processing by software, and may be processed by dedicated hardware (or electronic circuitry).

Controller 30 controls the pair of compression bars 11 and 12 and the pair of electrodes 21 and 22. Specifically, controller 30 controls a load acting on first and second workpieces W10 and W20 from the pair of compression bars 11 and 12, a load acting on first and second workpieces W10 and W20 from the pair of electrodes 21 and 22, a voltage applied to the pair of electrodes 21 and 22, and an amount by which the pair of compression bars 11 and 12 and the pair of electrodes 21 and 22 are pressed. Controller 30 controls a current supplied to the pair of electrodes 21 and 22 by controlling a voltage applied to the pair of electrodes 21 and 22.

Controller 30 performs an operation of causing a load F (see Fig. 1) to act on first and second workpieces W10 and W20 from the pair of compression bars 11 and 12 so that protrusions W11 and W21 which contact each other are formed on first and second workpieces W10 and W20, respectively. Controller 30 also performs an operation of passing a current through first and second workpieces W10 and W20. Specifically, controller 30 performs an operation of passing a current through first and second workpieces W10 and W20 while causing load F to act on first and second workpieces W10 and W20 from the pair of compression bars 11 and 12, and also bringing contact surface 21a of first electrode 21 into contact with first workpiece W10 at a portion around a portion to which first compression bar 11 applies pressure and bringing contact surface 22a of second electrode 22 into contact with second workpiece W20 at a portion around a portion to which second compression bar 12 applies pressure. Controller 30 controls such that, as indicated by a broken line, a current X passes between the pair of electrodes 21 and 22 through protrusions W11 and W21.

Protrusions W11 and W21 are softened as current X passes. In the present embodiment, controller 30 causes load F to act on first and second workpieces W10 and W20 while passing current X to soften protrusions W11 and W21. Thus, in the present embodiment, first and second workpieces W10 and W20 can be joined together at the locations of protrusions W11 and W21.

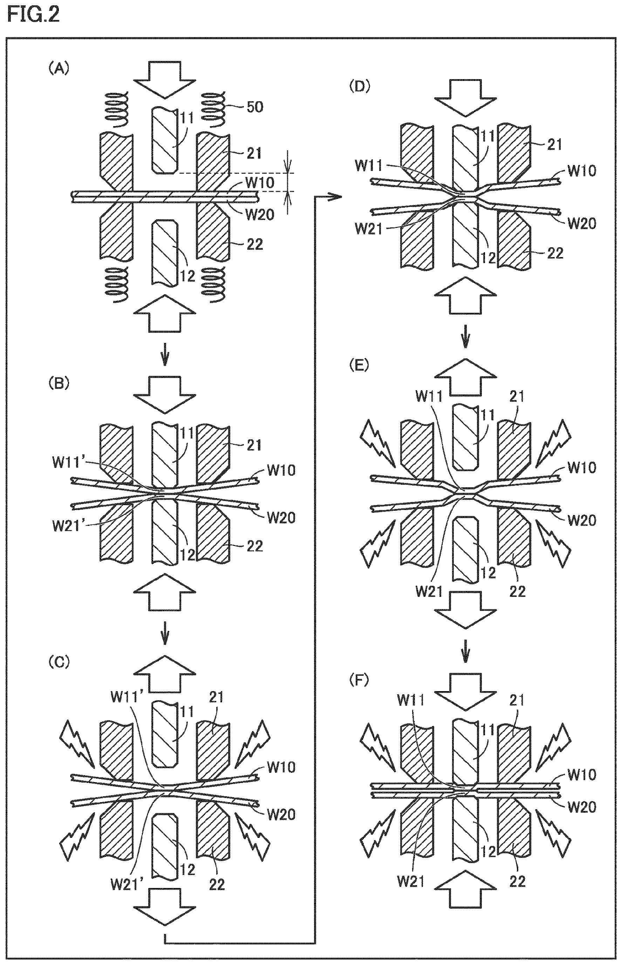

The joining process including removal of an impurity on the metal surface will now be described. Note that an impurity is a plating layer of a surface-treated metal steel sheet or the like. Fig. 2 is a diagram for illustrating a joining process including removal of an impurity on a metal surface in solid state welding apparatus 1 according to the embodiment of the present disclosure. Controller 30 performs the joining process in the order of Figs. 2(A) to 2(F). As shown in Fig. 2(A), the pair of electrodes 21 and 22 are secured to the pair of compression bars 11 and 12 by a spring 50. Spring 50 provides a biasing force, which acts on workpieces W10 and W20 via the pair of electrodes 21 and 22. In Fig. 2(B) et seq., spring 50 is not shown.

As illustrated in Fig. 2(A), controller 30 moves the pair of compression bars 11 and 12 toward workpieces W10 and W20. While this is done, workpieces W10 and W20 are clamped by the pair of electrodes 21 and 22. A contact load for example of 1 [kN] acts on each of workpieces W10 and W20 as the biasing force applied by spring 50. The pair of electrodes 21 and 22 is biased to a position projecting toward workpieces W10 and W20 by about 1 [mm] with reference to the pair of compression bars 11 and 12. The pair of compression bars 11 and 12 and the pair of electrodes 21 and 22 are a mechanism that is entirely driven by a single driving source (a servo press or the like) (not shown).

From the state of Fig. 2(A), as shown in Fig. 2(B), controller 30 moves the pair of compression bars 11 and 12 toward workpieces W10 and W20, and applies a pressing load to workpieces W10 and W20 so as to form small protrusions W11' and W21'. As workpieces W10 and W20 receive the pressing load, small protrusions W11' and W21' are formed, and workpieces W10 and W20 contact each other in a small area via the small protrusions.

Subsequently, as shown in Fig. 2(C), controller 30 subjects compressive force applied by the pair of compression bars 11 and 12 to load removal so that a load smaller than the pressing load acts on each of workpieces W10 and W20 from the pair of compression bars 11 and 12. "Load removal" means removing at least a portion of a load caused to act on each of workpieces W10 and W20. In Fig. 2(C), the compressive force applied by the pair of compression bars 11 and 12 is subjected to load removal to be 0 [kN]. Note that the contact load of 1 [kN] is maintained from the pair of electrodes 21 and 22 for each of workpieces W10 and W20.

As illustrated in Fig. 2(C), controller 30 exerts control such that a current passes between the pair of electrodes 21 and 22 via small protrusions W11' and W21' while the compressive force applied by the pair of compression bars 11 and 12 is subjected to load removal. The current passing through small protrusions W11' and W21' enables removal of an impurity remaining on a surface of each of surface-treated workpieces W10 and W20.

Subsequently, as shown in Fig. 2(D), controller 30 increases the compressive force applied by the pair of compression bars 11 and 12 so that a protrusion forming load larger than the pressing load acts on each of workpieces W10 and W20 from the pair of compression bars 11 and 12. Protrusions W11 and W21 are formed on workpieces W10 and W20 as the protrusion forming load is applied. Protrusions W11 and W21 have a larger area in contact with workpieces W10 and W20 than small protrusions W11' and W21' do.

Subsequently, as shown in Fig. 2(E), controller 30 subjects the compressive force applied by the pair of compression bars 11 and 12 to load removal so that a load smaller than the protrusion forming load acts on each of workpieces W10 and W20 from the pair of compression bars 11 and 12. In Fig. 2(E), the compressive force applied by the pair of compression bars 11 and 12 is subjected to load removal to be 0 [kN]. Subjecting to load removal the compressive force applied by the pair of compression bars 11 and 12 can reduce the contact area between protrusions W11 and W21. Note that the contact load of 1 [kN] is maintained from the pair of electrodes 21 and 22 for each of workpieces W10 and W20.

As illustrated in Fig. 2(E), controller 30 exerts control such that a current passes between the pair of electrodes 21 and 22 via protrusions W11 and W21 while the compressive force applied by the pair of compression bars 11 and 12 is subjected to load removal. As the current passes through protrusions W11 and W21, protrusions W11 and W21 are softened.

Subsequently, as shown in Fig. 2(F), controller 30 increases the compressive force applied by the pair of compression bars 11 and 12 so that a joining load larger than the protrusion forming load acts on each of workpieces W10 and W20 from the pair of compression bars 11 and 12. Workpieces W10 and W20 receiving the joining load are joined together at the locations of protrusions W11 and W21. Specifically, protrusions W11 and W21 each have a softened region (a region including the interface of the contact portion between workpieces W10 and W20) plastically deformed, and therewhile joined in a solid state.

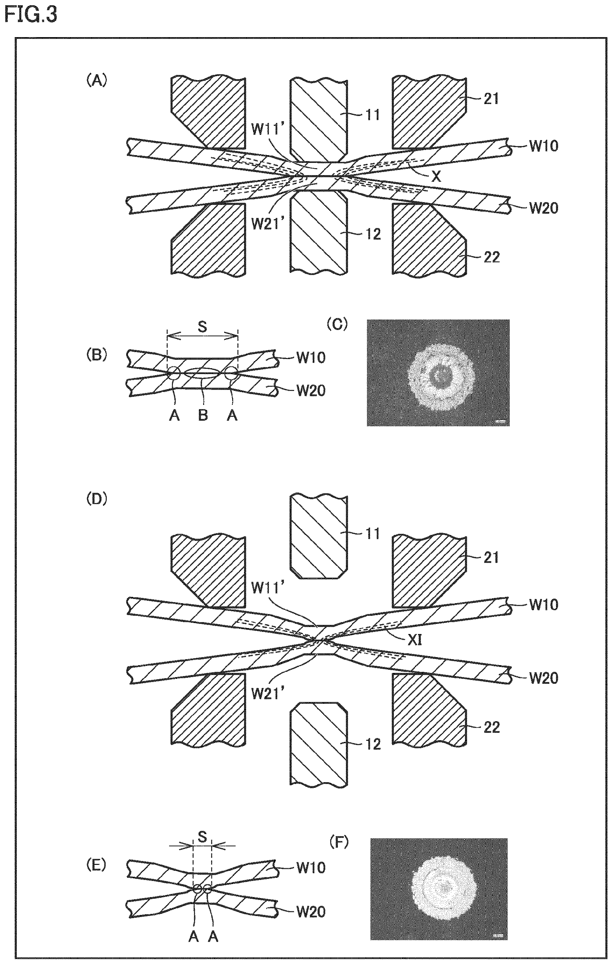

Hereinafter, a difference between a comparative example in which a load is not subjected to load removal and an embodiment of the present disclosure in which a load is subjected to load removal, will be described. Fig. 3 is a diagram schematically showing how a current passes in different manners depending on a difference in load. Fig. 3(A) is a diagram illustrating how the current passes when the load is not subjected to load removal, Fig. 3(B) is a diagram illustrating a state when the current passes when the load is not subjected to load removal, and Fig. 3(C) is a diagram illustrating a joined state after the current passes when the load is not subjected to load removal. Fig. 3(D) is a diagram illustrating how the current passes when the load is subjected to load removal, Fig. 3(E) is a diagram illustrating a state when the current passes when the load is subjected to load removal, and Fig. 3(F) is a diagram illustrating a joined state after the current passes when the load is subjected to load removal.

As shown in Fig. 3(A), current X in the comparative example passes through small protrusions W11' and W21' at a location closer to the outer side than a location closer to the central portion. In contrast, as shown in Fig. 3(D), current X in the embodiment of the present disclosure passes through small protrusions W11' and W21' at a location closer to the central portion.

Specifically, in the comparative example, as shown in Fig. 3(B), workpieces W10 and W20 have a contact area S that is a large area, whereas in the embodiment of the present disclosure, as shown in Fig. 3(E), workpieces W10 and W20 have contact area S that is an area smaller than that of the comparative example. Current X passing through the pair of electrodes 21 and 22 passes through the shortest path between the pair of electrodes 21 and 22 through each of small protrusions W11' and W21'. As a result, in the comparative example of Fig. 3(B), the central portion against which the pair of compression bars 11 and 12 are kept pressed does not easily pass the current and is thus a low heat generating region B, and a portion outer than low heat generating region B easily passes the current and is thus a high heat generating region A. In the embodiment of the present disclosure illustrated in Fig. 3(E), in contrast, the load of the pair of compression bars 11 and 12 is subjected to load removal, and the central portion thus becomes high heat generating region A.

In the comparative example, as shown in Fig. 3(C), current X hardly passes through the central portion, and an impurity due to plating on the metal surface would remain in the central portion. In the embodiment of the present disclosure illustrated in Fig. 3(F), in contrast, current X passes through the central portion and an impurity due to plating on the metal surface is discharged from the central portion toward the periphery and can thus be prevented from remaining at the central portion.

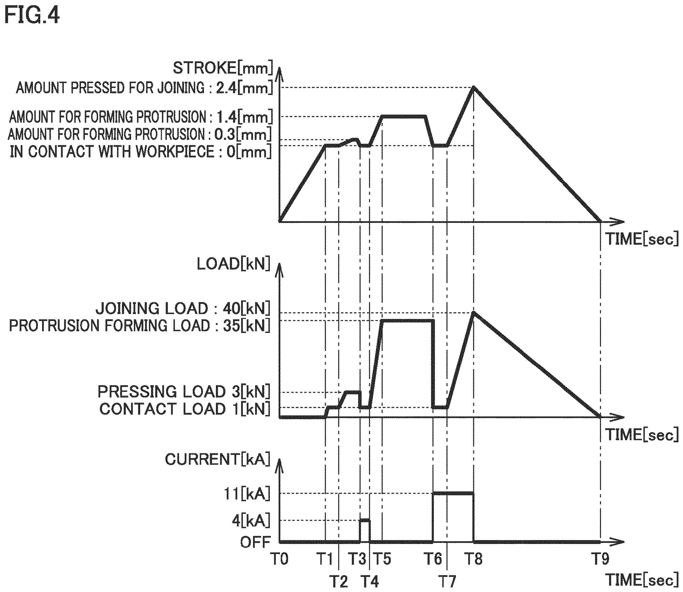

Hereinafter, a graph is used to describe how a current, a load and a stroke change with respect to time. Fig. 4 is a diagram showing how a current, a load and a stroke change with respect to time. The stroke in Fig. 4 indicates that compression bars 11 and 12 operate to stroke in equal amounts, and the load in Fig. 4 indicates that compression bars 11 and 12 act with equal loads.

As illustrated in Fig. 4, controller 30 from time T0 to time T1 causes a tip portion of solid state welding apparatus 1 to approach each of workpieces W10 and W20, and at time T1 sets a distance between the tip portion of solid state welding apparatus 1 and each of workpieces W10 and W20, or a stroke, to 0 [mm]. At time T1, the pair of electrodes 21 and 22 are in contact with workpieces W10 and W20. Controller 30 from time T1 to time T2 applies a contact load to workpieces W10 and W20 from the pair of electrodes 21 and 22. When this is done, the stroke and the current do not change, whereas the load increases by a contact load of 1 [kN] applied by the pair of electrodes 21 and 22 brought into contact with workpieces W10 and W20.

Subsequently, from time T2 to time T3, controller 30 presses the pair of compression bars 11 and 12 into workpieces W10 and W20 by 0.3 [mm] to form small protrusions W11' and W21'. When this is done, the stroke changes, and the pair of compression bars 11 and 12 are pressed into workpieces W10 and W20 with a pressing load of 3 [kN]. The current does not change from time T2 to time T3.

Subsequently, from time T3 to time T4, controller 30 subjects to load removal the compressive force applied by the pair of compression bars 11 and 12. As a result, the stroke is changed to 0 [mm], and the currently applied load is only 1 [kN] of the contact load. While this is done, controller 30 causes a current of 4 [kA] to pass through small protrusions W11' and W21' to discharge an impurity on the metal surface from the central portion toward the periphery. Solid state welding apparatus 1 can thus remove an impurity on the surface of the surface-treated metal.

Subsequently, from time T4 to time T5, controller 30 presses the pair of compression bars 11 and 12 into workpieces W10 and W20 by 1.4 [mm] to form protrusions W11 and W21. When this is done, the stroke changes, and the pair of compression bars 11 and 12 are pressed into workpieces W10 and W20 with a protrusion forming load of 35 [kN]. The controller keeps applying pressure by the protrusion forming load from time T5 to time T6. Note that the current does not change from time T4 to time T6.

Subsequently, from time T6 to time T7, controller 30 subjects to load removal the compressive force applied by the pair of compression bars 11 and 12. As a result, the stroke is changed to 0 [mm], and the currently applied load is only 1 [kN] of the contact load. While this is done, controller 30 passes a current of 11 [kA] through protrusions W11 and W21 to soften protrusions W11 and W21.

Subsequently, from time T7 to time T8, controller 30 presses the pair of compression bars 11 and 12 into workpieces W10 and W20 by 2.4 [mm] to join protrusions W11 and W21 together. When this is done, the stroke changes, and the pair of compression bars 11 and 12 are pressed into workpieces W10 and W20 with a joining load of 40 [kN]. The controller continues to pass a current of 11 [kA] through each of protrusions W11 and W21 from time T7 to time T8. This allows protrusions W11 and W21 to have their respective softened regions plastically deformed and therewhile joined together in a solid state. Subsequently, from time T8 to time T9, controller 30 decreases the stroke and the load, and maintains the current at 0 [kA].

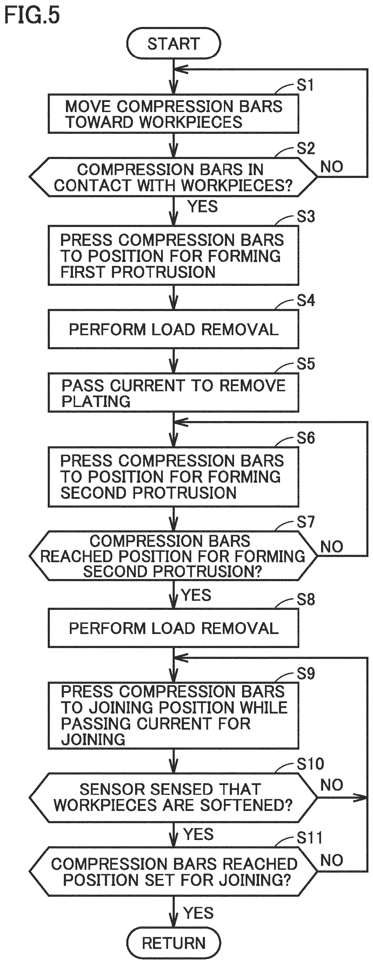

A process performed by controller 30 will now be described specifically. Fig. 5 is a flowchart of content of control performed by controller 30. The process of the flowchart of Fig. 5 is repeatedly invoked and performed as a subroutine from a main routine in the control by controller 30. Controller 30 initially in step (hereinafter simply referred to as "S") 1 moves the pair of compression bars 11 and 12 toward first and second workpieces W10 and W20.

Subsequently, controller 30 determines whether the pair of compression bars 11 and 12 are in contact with first and second workpieces W10 and W20 (S2). For example, controller 30 acquires a detection value of sensor 40, and determines that the pair of compression bars 11 and 12 are in contact with first and second workpieces W10 and W20 based on the detection value having increased. Controller 30 stores the contact position as a reference position in S2. When controller 30 determines that the pair of compression bars 11 and 12 are not in contact with first and second workpieces W10 and W20 (NO in S2), the controller returns to S1. When controller 30 determines that the pair of compression bars 11 and 12 are in contact with first and second workpieces W10 and W20 (YES in S2), the controller proceeds to S3.

In S3, controller 30 presses the pair of compression bars 11 and 12 to a position allowing a first protrusion, or small protrusions W11' and W21', to be formed. Subsequently, controller 30 subjects to load removal the compressive force applied by the pair of compression bars 11 and 12 (S4). Subsequently, controller 30 performs a step to pass a current through small protrusions W11' and W21' for removing an impurity such as plating on the metal surface (S5).

Subsequently, controller 30 presses the pair of compression bars 11 and 12 to a position allowing a second protrusion, or protrusions W11 and W21, to be formed (S6). Subsequently, controller 30 determines whether the pair of compression bars 11 and 12 has reached the position allowing the second protrusion to be formed (S7). For example, controller 30 may determine whether the pair of compression bars 11 and 12 has moved from the contact position stored in S2 to the position allowing protrusions W11 and W21, or the second protrusion, to be formed on first and second workpieces W10 and W20. Controller 30 stores the position allowing the second protrusion to be formed as a reference position in step S7. When controller 30 determines that the pair of compression bars 11 and 12 has not reached the position allowing the second protrusion to be formed (NO in S7), the controller returns to S6.

When controller 30 determines that the pair of compression bars 11 and 12 has reached the position allowing the second protrusion to be formed (YES in S7), the controller proceeds to S8. In S8, controller 30 subjects to load removal the compressive force applied by the pair of compression bars 11 and 12.

Subsequently, controller 30 presses the pair of compression bars 11 and 12 to a joining position while passing a current for joining (S9). Subsequently, controller 30 determines based on a detection value of sensor 40 whether first and second workpieces W10 and W20 have protrusions W11 and W21 softened (S10). Controller 30 determines whether protrusions W11 and W21 are softened for example based on whether the detection value of sensor 40 is equal to or smaller than a predetermined threshold value. When controller 30 determines that protrusions W11 and W21 are not softened (i.e., when the detection value of sensor 40 is larger than the threshold value), the controller returns to S9. When controller 30 determines that protrusions W11 and W21 are softened (i.e., when the detection value of sensor 40 is equal to or smaller than the threshold value), the controller 30 proceeds to 511.

In S11, controller 30 determines whether the pair of compression bars 11 and 12 has reached the joining position. For example, controller 30 may determine whether the pair of compression bars 11 and 12 has moved from the position stored in S7 and allowing the second protrusion to be formed to the joining position allowing first and second workpieces W10 and W20 to be joined together.

When controller 30 determines that the pair of compression bars 11 and 12 has not reached the joining position (NO in S11), the controller returns to S9. When controller 30 determines that the pair of compression bars 11 and 12 has reached the joining position (YES in S11), controller 30 returns the process from the subroutine to the main routine.

As shown in Fig. 5, after small protrusions W11' and W21' are formed in S4 and S5, solid state welding apparatus 1 of the present embodiment performs load removal and passes a current. This allows the current to be passed through small protrusions W11' and W21' at the central portion, and can thus effectively remove an impurity on a surface of the surface-treated metal.

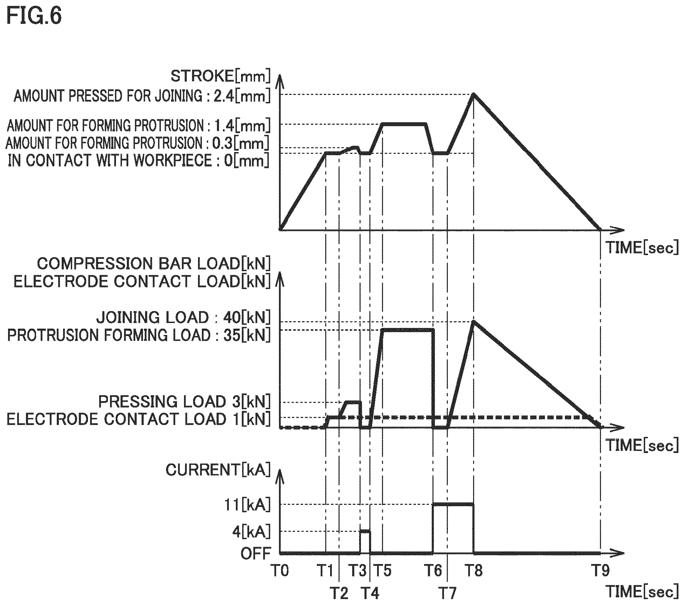

Hereinafter, a graph is used to describe how a current, a load and a stroke change with respect to time in an exemplary variation in which the pair of compression bars 11 and 12 and the pair of electrodes 21 and 22 are driven by separate driving sources (such as a servo press). For example, controller 30 controls movement of the pair of compression bars 11 and 12 by a first driving source, and controls movement of the pair of electrodes 21 and 22 by a second driving source. Fig. 6 is a diagram showing how a current, a load and a stroke change with respect to time in an exemplary variation.

The stroke and current in Fig. 6 will not be described as they are identical to those in Fig. 4. For the load, a compression bar load (indicated by a solid line), which corresponds to the pair of compression bars 11 and 12, and an electrode contact load (indicated by broken line), which corresponds to the pair of electrodes 21 and 22, are indicated on the same graph. As shown in Fig. 6, the electrode contact load is 0 [kN] from time T0 to time T3, and is 1 [kN] from time T3 to time T4. Thereafter, the electrode contact load becomes 0 [kN] from time T4 to time T6, 1 [kN] from time T6 to time T8, and thereafter 0 [kN] from time T8 to time T9.

Thus, the electrode contact load takes any value of 0 [kN] and 1 [kN]. The current is adapted to pass from time T3 to time T4 and from time T6 to time T8 when the electrode contact load is 1 [kN]. Note that the electrode contact load is also 0 [kN] or 1 [kN] when the electrodes are moved by separate actuators. Specifically, for a spring type, the electrode contact load can be set to 0 [kN] or 1 [kN] by adopting a floating mechanism.

As shown in Fig. 6, the compression bar load is 1 [kN] from time T1 to time T2, and is 3 [kN] from time T2 to time T3. Thereafter, from time T3 to time T4, the compression bar load becomes 0 [kN] for load removal. Thereafter, from time T4 to time T5, the compression bar load increases to 35 [kN] and from time T5 to time T6 the load of 35 [kN] is maintained. Thereafter, from time T6 to time T7, the compression bar load becomes 0 [kN] for load removal. Thereafter, from time T7 to time T8, the compression bar load increases to 40 [kN] and from time T8 to time T9 the load decreases.

As shown in Fig. 6, even when the pair of compression bars 11 and 12 and the pair of electrodes 21 and 22 are driven by separate driving sources, controller 30 can change a current, a load, and a stroke similarly as when the pair of compression bars 11 and 12 and the pair of electrodes 21 and 22 are driven by a single driving source.

While in the above embodiment a detection value of a load cell is used as sensor 40, a sensor different from the load cell may be used to sense that workpieces W10 and W20 are softened. As such a sensor, a camera capable of imaging a contact portion of protrusions W11 and W21 may be used. In this case, controller 30 determines whether workpieces W10 and W20 have been softened based on the luminance of the contact portion. As such a sensor, a contact-type or non-contact-type thermometer may be used. Controller 30 may determine whether workpieces W10 and W20 have been softened based on the temperature of the contact portion. Alternatively, controller 30 may determine whether workpieces W10 and W20 have been softened based on a result of a calculation of the heat quantity of each of workpieces W10 and W20 acquired in advance, and a timer of a power supply.

### <Summary>

(1) Solid state welding apparatus 1 of the present disclosure comprises the pair of compression bars 11 and 12 that presses first surface-treated metal workpiece W10 and second surface-treated metal workpiece W20 on sides opposite in a direction of a thickness of the workpieces, the pair of electrodes 21 and 22 disposed around the pair of compression bars 11 and 12, respectively, and controller 30. Controller 30 controls the pair of compression bars 11 and 12 to cause a first load to act on each of first and second workpieces W10 and W20, subsequently controls the pair of compression bars 11 and 12 to subject compressive force to load removal to cause a second load smaller than the first load to act on first and second workpieces W10 and W20, and subsequently passes a current through the pair of electrodes 21 and 22 to remove an impurity on a metal surface.
(2) In solid state welding apparatus 1 of item (1), controller 30 passes a current through the pair of electrodes 21 and 22 while the pair of compression bars 11 and 12 has moved to a position out of contact with first and second workpieces W10 and W20.
(3) Solid state welding apparatus 1 of item (1) or (2) further comprises a driving source that drives the pair of compression bars 11 and 12 and the pair of electrodes 21 and 22. Controller 30 moves the pair of electrodes 21 and 22 while moving the pair of compression bars 11 and 12 by controlling the driving source.
(4) In solid state welding apparatus 1 of any one of items (1) to (3), after the metal surface has an impurity removed therefrom, the pair of compression bars 11 and 12 is controlled to cause a third load larger than the first load to act on each of first and second workpieces W10 and W20 and therewhile a current is passed through the pair of electrodes 21 and 22.
(5) A method of the present disclosure for removing an impurity relates to a method for removing an impurity on a metal surface by using solid state welding apparatus 1 comprising the pair of compression bars 11 and 12 that presses first surface-treated metal workpiece W10 and second surface-treated metal workpiece W20 on sides opposite in a direction of a thickness of the workpieces, the pair of electrodes 21 and 22 disposed around the pair of compression bars 11 and 12, respectively, and controller 30. Controller 30 performs the steps of: controlling the pair of compression bars 11 and 12 to cause a first load to act on each of first and second workpieces W10 and W20; subsequently controlling the pair of compression bars 11 and 12 to subject compressive force to load removal to cause a second load smaller than the first load to act on first and second workpieces W10 and W20; and subsequently passing a current through the pair of electrodes 21 and 22 to remove an impurity on the metal surface.

The presently disclosed solid state welding apparatus 1 and method for removing an impurity on a metal surface using solid state welding apparatus 1 causes a first load to act on each of first and second workpieces W10 and W20 and subsequently controls the pair of compression bars 11 and 12 to subject compressive force to load removal so that a second load smaller than the first load acts on first and second workpieces W10 and W20, and passes a current through the pair of electrodes 21 and 22. This allows the current to be passed through a central portion of a surface-treated metal and can thus remove an impurity on a surface of the metal.

It should be understood that the embodiments disclosed herein have been described for the purpose of illustration only and in a non-restrictive manner in any respect. The scope of the present invention is defined by the terms of the claims, rather than the description above, and is intended to include any modifications within the meaning and scope equivalent to the terms of the claims.

## Claims

1. A solid state welding apparatus (1) comprising:
a pair of compression bars (11,12) that presses a first surface-treated metal workpiece (W10) and a second surface-treated metal workpiece (W20) on sides opposite in a direction of a thickness of the workpieces;
a pair of electrodes (21,22) disposed around the pair of compression bars (11,12), respectively; and
a controller (30), the controller (30):
controls the pair of compression bars (11,12) to cause a first load to act on each of the first and second workpieces (W10,W20);
subsequently controls the pair of compression bars (11,12) to subject compressive force to load removal to cause a second load smaller than the first load to act on the first and second workpieces (W10,W20); and
subsequently passes a current through the pair of electrodes (21,22) to remove an impurity on a metal surface.

2. The solid state welding apparatus (1) according to claim 1, wherein the controller (30) passes a current through the pair of electrodes (212,22) while the pair of compression bars (11,12) has moved to a position out of contact with the first and second workpieces (W10,W20).

3. The solid state welding apparatus (1) according to claim 1 or 2, further comprising a driving source that drives the pair of compression bars (11,12) and the pair of electrodes (21,22), wherein the controller (30) moves the pair of electrodes (21,22) while moving the pair of compression bars (11.12) by controlling the driving source.

4. The solid state welding apparatus (1) according to claim 1 or 2, wherein after the controller removes an impurity on the metal surface, the controller (30) controls the pair of compression bars (11,12) to cause a third load larger than the first load to act on each of the first and second workpieces (W10,W20) and therewhile passes a current through the pair of electrodes (21,22).

5. A method for removing an impurity on a metal surface by using a solid state welding apparatus (1), the solid state welding apparatus (1) comprising:
a pair of compression bars (11,12) that presses a first surface-treated metal workpiece (W10) and a second surface-treated metal workpiece (W20) on sides opposite in a direction of a thickness of the workpieces;
a pair of electrodes (21,22) disposed around the pair of compression bars (11,12), respectively; and
a controller (30), the method for removing an impurity on the metal surface comprising, by using the controller (30):
controlling the pair of compression bars (11,12) to cause a first load to act on each of the first and second workpieces (W10,W20);
subsequently controlling the pair of compression bars (11,12) to subject compressive force to load removal to cause a second load smaller than the first load to act on the first and second workpieces (W10,W20), and
subsequently passing a current through the pair of electrodes (21,22) to remove an impurity on the metal surface.
